# EUROPEAN PATENT SPECIFICATION

(11) **EP 0 379 477 B1**
(45) Date of publication and mention of the grant of the patent: **14.04.1993**
(21) Application number: 87905754.5
(22) Date of filing: 26.08.1987
(51) Int. Cl.: C04B 16/06

(54) **A SELF-LEVELING SLURRY SCREED, AND A DRY PRODUCT FOR USE IN PREPARING IT**
SCHLAMM FÜR SELBST-AUSNIVELLIERENDEN ESTRICH UND EIN TROCKENPRODUKT ZU SEINER HERSTELLUNG
CHAPE DE COULIS A AUTO-EGALISATION, ET PRODUIT SEC UTILISE POUR LA PREPARER

(43) Date of publication of application: 01.08.1990
(73) Proprietor: OPTIROC OY AB, 00440 Helsinki (FI)
(72) Inventor: ALGARS, Rainer, Allan, SF-21600 Parainen (FI); TURTO, Helena, Inkeri, SF-21420 Lieto (FI); HYYTIÄ, Armas, Toivo, SF-21600 Parainen (FI); LEINO, Markku, SF-08200 Lohja (FI); LE BELL, Jean, SF-20600 Turku (FI); SUNDEN, Fred, SF-21660 Nagu (FI)
(74) Representative: Woods, Geoffrey Corlett
(86) International application number: FI8700110
(87) International publication number: WO8901916

(56) References cited:
- GB-A- 2 035 990
- GB-A- 2 083 015
- GB-A- 2 142 619
- US-A- 4 039 492
- US-A- 4 394 175
- US-A- 4 428 775

## Description

The present invention relates to a self-leveling slurry screed and to a dry product for use in preparing it; on site, water is mixed with the dry product to prepare a ready-to-use self-leveling slurry screed.

The use of self-leveling slurry screeds has been known long in the building industry. The flow properties of these products have made possible the development of a new working technique, according to which the slurry screeds are usually pumped onto the floor, where they level out and harden to form a surface capable of being coated. Some of the products available on the market are also suitable for manual leveling.

Water is mixed on site with the dry raw ingredients of the self-leveling slurry screeds to form a ready-to-use slurry screed. A typical amount of water mixed with the dry raw ingredients is approximately 20-25 % by weight, calculated from the dry ingredients. The basic raw ingredients include cement, which serves as the binder, sand, various fillers, gypsum as a shrinkage-compensating agent, as well as admixtures which improve adhesion and provide flow properties.

It is previously known to prime the base, before the slurry-screeding of the floor, with a mixture of a plastic dispersion and water, the purpose of which is to improve the adhesion of the slurry screed to the base, to prevent the escaping of water from the slurry screed and to prevent the access of air into the slurry screed from the pores in the base. Sometimes the adhesive properties are improved by using a so-called adhesion bridge, in which sand, cement or screed is added to a mixture of a plastic dispersion and water, and the mixture is brushed onto the base to be slurry-screeded.

In spite of the steps carried out, slurry screeds require a good base in order to ensure adhesion. The base to be slurry-screeded must be firm and the surface must be clean, for example from cement adhesive. Special bases, such as wooden floors, are not normally suitable as bases for self-leveling slurry screeds, owing to the movement of wood due to moisture.

Cement serving as the binder in slurry screeds will shrink when drying and will produce stresses in the slurry screed. If the stresses are high and the base is weak or unsuitable for the slurry screed, the screed may crack, detach from its base and break into fragments. Reinforcing of the slurry screed by means of, for example, metal mesh, will improve the situation somewhat, but the method is in practice inconvenient.

From GB Patent application publication 2 142 619 there is known a composition which contains cement, expansive agent, sand, water, air-entraining agent, and fluidifier. In this publication it is stated that the said composition is selfleveling, or at least partly self-leveling. It is indeed evident from the publication that the composition is capable of being pumped, but its rapid spreading over the base requires leveling tools. Thus the mixture described in this GB application publication 2 142 619 is a so-called flowing concrete, the fluidity of which is greater than that of conventional basic concrete and which is used in a rather thick layer to reinforce a frame surface cast from basic concrete, in which case it serves at the same time as a reinforcement layer and a coarse leveler. It is further mentioned in this publication that the composition may contain a small amount of polypropylene fibers (less than 0.03 % by weight) to improve the flexural strength of the concrete layer formed.

It is the purpose of the present invention to provide a self-leveling slurry screed by means of which the problems mentioned above can be avoided and which, when drying and hardening, will form a coating which has good mechanical properties and adheres firmly to its base.

According to the invention, these objects have been accomplished in a highly satisfactory manner by means of a self-leveling slurry screed which, in addition to binder, aggregate, possibly admixtures used in the preparation of self-leveling slurry screeds, and water, also contains fibers.

The invention also relates to a dry product for use in the preparation of a self-leveling slurry screed for floors, the dry product containing, in addition to binder, aggregate and possibly admixtures used for the preparation of self-leveling slurry screeds, also fibers.

Water is mixed with this dry product on site in an amount of approximately 20-30 %, preferably 22-26 %, calculated from the dry product.

The fibers used in the slurry screed and dry product according to the invention may be, for example, synthetic polymer fibers, such as polyolefin, polyacrylic nitrile or polyvinyl alcohol fibers or carbon fibers or other fibers of similar types. Polypropylene fibers are especially advantageous.

The products according to the invention, i.e. the slurry screed for floors and the dry product, contain fibers preferably approximately 0.05-3 % by weight, calculated from the dry materials. The typical length of the fibers is 1-20 mm, preferably approximately 5-7 mm.

The products according to the invention contain as binder preferably cement, but other binders or binder mixtures can also be used. The products contain as aggregate preferably sand, but other aggregates, such as limestone powder, can also be used.

The products according to the invention may additionally contain various admixtures used in products of similar types, for example fillers such as fly ash, adhesives such as polyvinyl acetate (PVA) powder, shrinkage-compensating agents such as gypsum, flow-promoting agents such as Melment (trademark, manufacturer S K W), anti-foaming agents, and retarders such as gypsum retarder.

The following is a preferred composition of a self-leveling slurry screed according to the invention:
10-40 parts by weight binder, preferably cement
25-60 parts by weight aggregate, preferably sand
20-40 parts by weight filler, preferably fly ash
0.1-5 parts by weight adhesive agent, preferably PVA powder
0.1-10 parts by weight shrinkage-compensating agent, preferably gypsum
0.1-1 part by weight flow-promoting agent, preferably gypsum
0-1 part by weight other admixtures
0.05-3 parts by weight polypropylene fibers
20-30 parts by weight water, calculated per 100 parts by weight of dry materials.

The following is a preferred composition of the dry product according to the invention:
10-40 % by weight binder, preferably cement
25-60 % by weight aggregate, preferably sand
20-40 % by weight filler, preferably fly ash
0.1-5 % by weight adhesive agent, preferably PVA powder
0.1-10 % by weight shrinkage-compensating agent, preferably gypsum
0.1-1 % by weight flow-promoting agent, preferably gypsum
0-1 % by weight other admixtures
0.05-3 % by weight polypropylene fibers.

The surprising properties of the fiber-reinforced slurry screed for floors include the ability of the product to remain self-leveling and pumpable in spite of the addition of fibers, since it could have been expected that the addition of fibers would in general lead to the elimination of these properties, or at least to a substantial deterioration of these properties.

The self-leveling slurry screed according to the invention extends the use of slurry screeds also to surfaces which have traditionally been regarded as problem areas. It had been experienced as a deficiency of normal slurry screeds for floors that they are not suitable for the leveling of bases appearing in renovation and repair construction, such as weak concrete, wood and various compound floors (for example, magnesite floors or gypsum mix floors). The fiber-reinforced slurry screed according to the invention can be used for these purposes.

The self-leveling fiber-reinforced slurry screed according to the invention can, in addition, be used for coating a rather soft base, such as a mineral wool base, whereby a well adhering, internally strong, resilient and wear-resistant final coating for use is obtained.

The excellent useful properties of the slurry screed according to the invention are achieved by incorporating fibers, especially polypropylene fibers, into the screed. Owing to vigorous agitation, at the preparation step the fibers do not bind to each other but remain detached and are evenly distributed throughout the whole mix.

The invention is described below in greater detail with the aid of an example and a comparison experiment.

### Example

A mixture of dry ingredients was prepared by mixing vigorously the following ingredients:

| | |
|---|---|
| Portland cement | 24.0 % by weight |
| sand | 35.8 % by weight |
| fly ash | 33.0 % by weight |
| Vinapol 1070 (PVA powder) | 2.0 % by weight |
| gypsum | 3.0 % by weight |
| Melment F 10 | 0.7 % by weight |
| anti-foaming agent | 0.5 % by weight |
| gypsum retarder (GV2) | 0.2 % by weight |
| polypropylene fiber, length 6 mm | 0.8 % by weight |

Water was added to this dry product at 23 % by weight, calculated from the dry product.

The obtained slurry screed is self-leveling and, when hardening, it will form a coating which has excellent mechanical properties.

### Comparison experiment

A compression test prism (prism A) was made from the slurry screed prepared in the example presented above and, respectively, a compression test prism (prism B) was made of a slurry screed which did not contain polypropylene fibers but in other respects corresponded to the slurry screed described in the example presented above.

When prism B is stressed, at a certain stress the prism will fracture, i.e. prism B is brittle.

Instead, when the fiber-reinforced prism A is stressed in a corresponding manner, prism A will remain cohesive even at stresses under which prism B will fracture. In other words, the fibers maintain prism A cohesive under stresses which the cement matrix cannot withstand.

These test results show that the fiber-reinforced product withstands greater stresses and deformations without fracture than would a product which is not fiber-reinforced.

Under field conditions, for example, in the question of weak bases, the fiber-reinforced structure ensures the functioning of the product, and the slurry screed constitutes in a certain sense a bearing structure which the fibers keep cohesive.

## Claims

1. A pumpable and totally self-leveling slurry screed for floors **characterized** in that said slurry screed comprises
10-40 parts by weight of cement,
25-60 parts by weight of sand,
20-40 parts by weight of a filler,
0.1-5 parts by weight of an adhesive,
0.1-10 parts by weight of a shrinkage-compensating agent,
0.1-1 part by weight of a flow-promoting agent, and
0.05-3 parts by weight of polypropylene fibers, as well as
20-30 parts by weight of water, calculated per 100 parts by weight of dry ingredients.

2. A slurry screed according to Claim 1, **characterized** in that the length of the polypropylene fibers is 1-20 mm, especially 5-7 mm.

3. A slurry screed according to Claim 1 or 2, **characterized** in that said filler comprises fly ash.

4. A slurry screed according to any of Claims 1 to 3, **characterized** in that said adhesive comprises polyvinyl acetate powder.

5. A slurry screed according to any of Claims 1 to 4, **characterized** in that said shrinkage-compensating agent comprises gypsum.

6. A dry product for use in the preparation of a pumpable and totally self-leveling slurry screed for floors, **characterized** in that said dry product comprises
10-40 % by weight of cement,
25-60 % by weight of sand,
20-40 % by weight of a filler,
0.1-5 % by weight of an adhesive,
0.1-10 % by weight of a shrinkage-compensating agent,
0.1-1 % by weight of a flow-promoting agent,
and 0.05-3 % by weight of polypropylene fibers.

7. A dry product according to Claim 6, **characterized** in that the length of the polypropylene fibers is 1-20 mm, especially 5-7 mm.

8. A dry product according to Claim 6 or 7, **characterized** in that said filler comprises fly ash.

9. A dry product according to any of Claims 6 to 8, **characterized** in that said adhesive comprises polyvinyl acetate powder.

10. A dry product according to any of Claims 6 to 9, **characterized** in that said shrinkage-compensating agent comprises gypsum.

## Patentansprüche

1. Pumpfähige und vollständig selbstnivellierender Estrichmasse für Fußböden, **dadurch gekennzeichnet**, daß die besagte Estrichmasse
10 - 40 Gewichtsanteilen Zement,
25 - 60 Gewichtsanteilen Sand,
20 - 40 Gewichtsanteilen eines Füllmaterials,
0,1 - 5 Gewichtsanteilen eines Klebers,
0,1 - 10 Gewichtsanteilen eines Schrumpfungsausgleichsmittels,
0,1 - 1 Gewichtsanteil eines Fließverbesseres,
und 0,05 - 3 Gewichtsanteilen Polypropylenfasern sowie 20 bis 30 Gewichtsanteilen Wasser, bezogen auf je 100 Gewichtsanteile Trockenmasse beinhaltet.

2. Estrichmasse nach Anspruch 1, dadurch gekennzeichnet, daß die Länge der Polypropylenfasern 1 bis 20 mm, vorzugsweise 5 bis 7 mm beträgt.

3. Estrichmasse nach Anspruch 1 oder 2, dadurch gekennzeichnet, daß das vorgenannte Füllmaterial Flugasche beinhaltet.

4. Estrichmasse nach einem der Ansprüche 1 bis 3, dadurch gekennzeichnet, daß der vorgenannte Kleber Polyvinylacetatpuder beinhaltet.

5. Estrichmasse nach einem der Ansprüche 1 bis 4, dadurch gekennzeichnet, daß das vorgenannte Schrumpfungsausgleichsmittel Gips enthält.

6. Ein Trockenprodukt zur Verwendung für die Herstellung einer pumpfähigen und vollkommen selbstnivellierenden Estrichmasse für Fußböden, dadurch gekennzeichnet, daß das genannte Trockenprodukt
10 - 40 Gewichtsprozente Zement,
25 - 60 Gewichtsprozente Sand,
20 - 40 Gewichtsprozente eines Füllmaterials,
0,1 - 5 Gewichtsprozente eines Klebers,
0,1 - 10 Gewichtsprozente eines Schrumpfungsausgleichsmittels,
0,1 - 1 Prozent eines Fließverbesseres,
und 0,05 - 3 Gewichtsprozente Polypropylenfasern enthält.

7. Trockenprodukt nach Anspruch 6, dadurch gekennzeichnet, daß die Länge der Polypropylenfasern 1 bis 20 mm, vorzugsweise 5 bis 7 mm beträgt.

8. Trockenprodukt nach Anspruch 6 oder 7, dadurch gekennzeichnet, daß das vorgenannte Füllmaterial Flugasche enthält.

9. Trockenprodukt nach einem der Ansprüche 6 bis 8, dadurch gekennzeichnet, daß der vorgenannte Kleber Polyvinylacetatpuder enthält.

10. Trockenprodukt nach einem der Ansprüche 6 bis 9, dadurch gekennzeichnet, daß das vorgenannte Schrumpfungsausgleichsmittel Gips beinhaltet.

## Revendications

1. Un coulis de ragréage pour sols qui peut être pompé et qui s'étale horizontalement entièrement et de lui même, caractérisé en ce qu'il comporte
10 à 40 parties en poids de ciment,
25 à 60 parties en poids de sable,
20 à 40 parties en poids de matière de remplissage,
0,1 à 5 parties en poids d'un adhésif,
0,1 à 10 parties en poids d'un agent de compensation du rétreint,
0,1 à 1 partie en poids d'un fluidifiant, et
0,05 à 3 parties en poids de fibres de polypropylène, ainsi que
20 à 30 parties d'eau, calculé pour 100 parties en poids de matière sèche.

2. Un coulis selon la revendication 1, caractérisé en ce que la longueur des fibres de polypropylène est de 1 à 20 mm, de préférence 5 à 7 mm.

3. Un coulis selon la revendication 1 ou 2, caractérisé en ce que ladite matière de remplissage contient des cendres légères.

4. Un coulis selon l'une des revendications 1 à 3, caractérisé en ce que ledit adhésif comporte une poudre d'acétate de polyvinyle.

5. Un coulis selon l'une des revendications 1 à 4, caractérisé en ce que ledit agent de compensation du rétreint comporte du gypse.

6. Un produit sec destiné à la préparation d'un coulis de ragréage pour sols qui peut être pompé et qui s'étale horizontalement entièrement et de lui-même, caractérisé en ce que ledit produit sec comprend :
10 à 40 % en poids de ciment,
25 à 60 % en poids de sable,
20 à 40 % en poids de matière de remplissage,
0,1 à 5 % en poids d'un adhésif,
0,1 à 10 % en poids d'un agent de compensation du rétreint,
0,1 à 1 % en poids d'un fluidifiant, et
0,05 à 3 % en poids de fibres de polypropylène.

7. Un produit sec selon la revendication 6, caractérisé en ce que le longueur des fibres de polypropylène est de 1 à 20 mm, de préférence 5 à 7 mm.

8. Un produit sec selon l'une des revendications 6 ou 7, caractérisé en ce que ledit produit de remplissage comporte des cendres légères.

9. Un produit sec selon l'une des revendications 6 à 8, caractérisé en ce que ledit adhésif comporte une poudre d'acétate de polyvinyle.

10. Un produit sec selon l'une des revendications 6 à 9, caractérisé en ce que ledit agent de compensation du rétreint comporte du gypse.
